# EUROPEAN PATENT SPECIFICATION

(11) **EP 3 376 216 B1**
(45) Date of publication and mention of the grant of the patent: **13.09.2023**
(21) Application number: 16864656.0
(22) Date of filing: 07.11.2016
(51) Int. Cl.: G01N 27/90

(54) **METHOD FOR EDDY-CURRENT TESTING OF ELECTRICALLY CONDUCTIVE OBJECTS AND DEVICE FOR REALIZING SAID METHOD**
VERFAHREN ZUM WIRBELSTROMTESTEN VON ELEKTRISCH LEITENDEN OBJEKTEN UND VORRICHTUNG ZUR DURCHFÜHRUNG DES BESAGTEN VERFAHRENS
PROCÉDÉ DE CONTRÔLE PAR COURANTS DE FOUCAULT D'OBJETS CONDUCTEURS DE COURANT ET DISPOSITIF DE SA MISE EN OEUVRE

(30) Priority: 10.11.2015 RU 2015148061
(43) Date of publication of application: 19.09.2018
(73) Proprietor: Obschestvo S Ogranichennoy Otvetstvennostiyu "Alfaservis", Tomsk 634049 (RU)
(72) Inventor: ROMANOV, Sergey Ivanovich, Tomsk 634041 (RU); KRANIN, Mihail Anatolievich, Tomsk 634040 (RU); KRANIN, Dmitrii Mihailovich, St.Petersburg 197350 (RU); SEREBRENNIKOV, Andrey Nikolaevich, Tomsk 634003 (RU); BUDKOV, Aleksey Removich, Tomsk 634028 (RU)
(74) Representative: Jeck, Anton
(86) International application number: PCT/RU2016/000752
(87) International publication number: WO 2017/082770

(56) References cited:
- DE-A1-102004 045 271
- JP-A- S59 650
- JP-A- S59 226 858
- JP-A- 2001 116 726
- RU-C1- 2 032 898
- RU-C1- 2 542 624
- US-A- 2 519 367
- US-A- 3 881 151
- US-A- 4 207 519
- US-A- 5 610 518
- US-A1- 2013 009 632
- US-A1- 2015 233 868
- US-A1- 2015 233 868

## Description

### Field of the invention

The invention relates to methods and devices for contactless quality control of objects made of electrically conductive materials during manufacturing and using such objects. The invention can be applied in any industry where a one-way access product control is required, specifically, for controlling rolled sheet and tubular products.

### Background of the Invention

The problem of fault management of the above-mentioned objects is complicated by the fact that a simple visual inspection does not allow to detect faults located in the subsurface layer or deep inside such products.

To solve this problem and detect internal faults with the help of various methods of non-destructive testing, instruments like fault detectors are used, which enable non-destructive testing.

Non-destructive testing methods (NDTs) utilizing eddy-currents are based on studying the interaction between the electromagnetic field of an eddy-current transducer and electromagnetic field induced within the tested object by eddy-currents having a frequency of up to several MHz. In practice, this method is used to test objects made of electrically conductive materials. It helps obtaining such information as chemical composition and geometric dimensions of the product, structure of the material of which the object is made, and detect faults located on the surface and within the subsurface layer (as deep as 2-3 mm). Eddy-current fault detector is a typical instrument utilized by this method. However, such instruments generally establish whether a fault is present, while obtaining complete and reliable information about the type and location of the fault by using such instruments is challenging.

The eddy-current NDTs known in the art are based on analysing the interaction between an external electromagnetic field and electromagnetic field generated by eddy-currents induced by the former by means of an excitation coil within an electrically conductive tested object. As a source of electromagnetic field, a sensor-equipped induction coil (one or several) called an eddy-current transducer (ECT) is typically used, which could be embodied in the form of a surface-probe or a feed-through coil. A sinusoidal (or pulsed) current acting inside the ECT coils generates an electromagnetic field, which penetrates into the electrically conductive tested object and excites eddy-currents therewithin. The electromagnetic field generated by such eddy-currents affects the transducer coils by inducing EMF therein or changing their electrical impedance. By recording the coil voltage or their resistance, the information about object properties and relative transducer position is obtained. Based on intensity of the current distribution within the tested object, it is possible to make a judgement regarding the product dimensions, material properties and existence of discontinuities.

One of the specific features of eddy-current testing is that it can be performed without any mechanical contact between the transducer and the object. They interact over a distance sufficient for enabling free movement of the transducer relative to the object (from fractions of a millimetre to several millimetres). Therefore, by using such methods, it is possible to obtain good control results even at high moving rates of the transducer relative to the surface of the tested object.

A number of inventions are known in the art that relate to eddy-current testing and can be used to resolve current technical issues.

The method described in the document DE 10 2004 045271 A1 uses the effect of magnetization of ferromagnetic materials and the effect of excitation of eddy currents created by relative movement of a magnetizing device and the ferromagnetic material for flaw detection. The method cannot be implemented to detect flaws in non-ferromagnetic electroconductive materials, such as copper, aluminum, carbon fiber composite, etc. The sensor used in this method is arranged in a distance to a pole of a magnet.

US 5 610 518 A describes a method that allows detecting of only ferromagnetic inclusions and particles in electrically conductive non-magnetic materials. Detection of such flaws occurs due to the effect of magnetization of that ferromagnetic inclusions and particles and, as a result, their manifestation in the form of "induced magnets" for the sensors of the device. Detecting flaws as non-ferromagnetic inclusions, cracks, pores, rolling marks, etc. by using this method is impossible. Two Hall-sensors are used that are each arranged in the vicinity of and between the poles of a horseshoe-magnet to detect eddy-currents created by the relative movement of the horseshoe-magnet and the electrically conductive non-magnetic material.

The device cited in JP S59 650 A represents an electromagnetic flaw detector and is intended for performing magnetic flaw detection of a wire rope as well as detecting flaws in a rope wire. The operation of this device does not involve eddy currents and cannot be used for the detection of flaws in non-ferromagnetic electroconductive materials. Different inductors are used for the creation of the magnetic fields and for the detection of the flaws.

A method of eddy-current double-frequency testing of products is included in the state of the art (RU2184931 C1, 10-Jul-2002.), wherein the first high-frequency eddy-current transducer is included within the oscillatory circuit. The phase difference between the high-frequency excitation signal and the output signal from the first transducer is used to adjust the frequency of this excitation signal to match it with the resonant frequency of the oscillatory circuit. Then, a low-frequency excitation signal is generated by dividing the frequency of the high-frequency excitation signal by an even coefficient, which is then supplied to a second low-frequency eddy-current transducer. The input-to-output frequency ratio is chosen based on the type of electrically conductive coating. Based on the results of processing the amplitude-phase values of the output voltage of the second converter, the thickness of the tested coating is determined. By adjusting the operating frequency of the second converter, the generalized parameter is stabilized and high measurement accuracy is achieved.

A common feature with respect to the proposed method is the excitation of eddy-currents within the tested object by means of an eddy-current transducer. A disadvantage of the above solution is the use of the eddy-current excitation technique involving a coil with an alternating electromagnetic field, which results in appearance of the skin effect and leads to reduction in the amplitude of electromagnetic waves as they penetrate inside the conducting medium. The skin effect is always present in case of alternating electromagnetic field, and the higher the operating frequency used during excitation, the stronger it is. As a result of the skin effect, the above-described method allows to confidently detect faults only in the surface and subsurface layers several millimetres deep.

A method of eddy-current flaw detection is included in the state of the art (RU2025724 C1, 30-Dec-1994.), which is designed to test electrically conductive products of extended shape, such as capillary tubes. This technical solution makes it possible to increase the accuracy by reducing the effect of the product moving rate. This is achieved by the fact that according to this method, which is based on excitation of a longitudinal electromagnetic field within a longitudinally moving product and generation of voltage caused by the difference between the eddy-current fields from two adjacent sections of the product and registered by two measurement channel coils, whose windings are positioned in the planes perpendicular to the direction of the excitation electromagnetic field, a second similar measurement channel is further created, which utilises two coils to measure the voltage caused by the difference between the eddy-current fields from two adjacent sections of the product, one of which is located in the middle of the sections analysed by the first channel, followed by sampling the obtained voltages and comparing their values to obtain a signal used to evaluate the defectiveness of the product. In this case, the sampling frequency is determined based on the relation F > 2V/H, where F is the channel sampling frequency; V is the moving rate of the tested product, m/s; and H is the basic distance between the coils of one of the channels.

The disadvantages of this method include the complexity of its implementation, since it includes a second measurement channel to improve the control accuracy, which makes the processing of information and tools required to implement such method more complex.

The common features with respect to the proposed method are the movement of the tested object relative to the eddy-current transducer, and the excitation of eddy-currents in the tested object by using an eddy-current transducer.

An eddy-current flaw detector for inspecting long conductive articles is included in the state of the art (RU2397486 C1, 20-Aug-2010), which comprises connected in series alternator, feed-through type eddy-current differential transducer (ECT), initial EMF compensator, high-frequency amplifier, amplitude-phase detector, low-frequency filter, low-frequency preamplifier, high-frequency filter, adjustable low-frequency amplifier, threshold device, sorting control unit, phase shifter, direct-current power supply and a solenoid, wherein the generator is directly connected to the second input of the compensator, while being connected to the second input of the amplitude-phase detector via the phase shifter, in which case the flaw detector is further provided with a second differential pair of measurement windings displaced along the ECT axis by a predetermined distance L, an analogue-to-digital converter (ADC) used to measure the output signals, a software-controlled microprocessor, a second measurement channel consisting of connected in series initial EMF compensator, high-frequency amplifier, amplitude-phase detector, low-frequency filter, low-frequency preamplifier, high-frequency filter, adjustable low-frequency amplifier, phase shifter included between the second output of the generator and the second input of the additional amplitude-phase detector, wherein said microprocessor is also connected with the generator via address and data bus-lines, two phase shifters, two high-frequency filters, two adjustable low-frequency amplifiers, ADC, threshold device and sorting control unit.

The common features with respect to the proposed device are the presence of an analogue-to-digital converter, a computing device and an eddy-current transducer. The disadvantages of the above device include the use of a feed-through type eddy-current differential transducer (ECT) as part of its design, which sharply limits the field of application of such device due to the requirement of two-way access to the tested object, which is by no means always possible.

An eddy-current testing device is included in the state of the art (RU2102739 C1, 20-Jan-1998), which comprises connected in series generator, eddy-current transducer, amplitude-phase selection unit with its second input connected to the second output of the generator, indicator, analogue-to-digital converter, digital recursive filter, dynamic signal conversion unit and a computer. The disadvantage of this device is the use of an alternating electromagnetic field for excitation of eddy-currents, which complicates the design due to the requirement of including in it a generator as a source of electromagnetic field.

The common features with respect to the proposed device are the presence of an analogue-to-digital converter, computing device and an eddy-current transducer. It should be noted that the technique of eddy-current excitation by generating an electromagnetic field by the excitation coil is not the only option to excite eddy-currents within electrically conductive objects, since another method of exciting eddy-currents within conductors by reciprocal magnet/conductor displacement is widely known.

A "Differential sensor, inspection system and method for the detection of anomalies in electrically conductive materials" is included in the state of the art (US2015/0233868 A1, 20-Aug-2015.).

In this method, the excitation of eddy-currents is accomplished by moving a permanent magnet of the differential sensor - equipped testing system relative to the electrically conductive material at a rate V parallel to its surface at a certain distance.

"A differential sensor for the detection of anomalies in electrically conductive materials has a permanent magnet (PM), a first coil (S1) with one or more first windings, which run around the permanent magnet and define a first coil axis (A1), and a second coil (S2) with one or more second windings, which run around the permanent magnet and define a second coil axis (A2), which runs transversely, in particular perpendicularly, to the first coil axis. A third coil (S3) has the axis, oriented perpendicularly to the axes of the coils (S1) and (S2). Changes in the magnetic flux can be sensed and analysed separately for each of the coils. The sensor is part of an inspection system, which includes said sensor and an analyser (A), which is configured for sensing separately for each coil electrical voltages, induced in the windings of the coils, or signals derived there from in the windings of the coils (S1, S2, S3) of the differential sensor and correlating them by applying at least one evaluation method."

Specific features of this method and the device for realisation thereof are:
a) the use of a magnetic circuit, which passes the magnetic flux into three receiving coils;
b) the fact that the three receiving coils are wound around the magnetic core in three planes orthogonal to one another, while the planes of the coils are also orthogonal to each other.

The main disadvantages of this method and the device for realisation thereof are:
1. In the above invention, the receiving coils are used whose winding are symmetrical with respect to the poles **N and S.** With such design, the receiving coil can be represented as an "equivalent fine coil" having the number of turns equal to the number of turns of the coil wound uniformly around the magnet "from pole to pole", while positioned symmetrically with respect to poles **N** and **S.** In this case, the distance from the plane, in which such "equivalent fine coil" is located, to any of the poles will be equal to half the length of the magnetic core. In this case, the distance from the plane of the "equivalent fine coil" to the plane of the electrically conducting object will be equal to the sum of the distances from the plane of the coil to the pole of the magnet facing the electrically conductive object and from the pole of the magnet to the plane of the electrically conducting object. The latter represents the value of the minimum gap required to ensure that there is no mechanical contact between the magnet and the electrically conductive object. Such positioning of the coil relative to the plane of the electrically conductive object at a distance equivalent to "half the distance from pole **N** to pole **S"** leads to a decrease in the excitation efficiency of the EMF induced in the coil by eddy-currents interacting with the fault and, hence, to a decrease in the sensitivity of the sensor.
2. The use of a magnetic circuit of such design leads to the appearance of a "skin effect" in the conductive material of the magnetic core. This is especially evident in case of high-frequency components of electromagnetic waves resulting from eddy-currents that occur at high movement rates of the sensor relative to the electrically conductive object. In turn, the "skin effect" may become an obstacle limiting the penetration of alternating electromagnetic field into the farthest windings of the receiving coil, and, hence, may result in a decrease in the sensitivity of the sensor.
3. The use of a magnetic circuit of such design leads to the appearance of secondary eddy-currents in the conductive material of the magnet, which, according to the Lenz rule, oppose this field. As a result, the efficiency of EMF excitation in the receiving coil (coils) and sensitivity of the sensor also decrease.
   In the device and method of said analogue, an increase in strength of the magnetic field generated by the magnet in order to increase the intensity of eddy-currents in the electrically conductive object by increasing its size and the distance between the poles may lead (as indicated in par. 1) to a decrease in its sensitivity.
4. The orientation of the receiving coils with regards to three coordinates to ensure high sensitivity of the sensor to electromagnetic fields from any direction reduces its noise immunity under real conditions of technical production. This is due to the sensor requirement to have the maximum sensitivity in the direction of possible location of the fault and to have zero sensitivity to all other directions from which the interference signals may come.

A common feature of the proposed method and the method described in the above-referenced patent is that the testing of the electrically conductive object is realised by excitation the eddy-currents using a constant magnetic field and scanning the electrically conductive object with a contactless surface-type eddy-current transducer (inductive sensor) moving at a rate V (m/s) with respect to the tested object.

A common feature of the proposed device and the device described in the above-referenced patent is that a surface-type eddy-current transducer connected to the processing and analysis unit is used as an eddy-current transducer.

The method closest to the proposed method based on the problem to be solved and technical substance is the "method of eddy-current monitoring of copper wire rod and device for its implementation" (RU2542624 C1, 20-Feb-2015) based on excitation of eddy-currents in the tested product by using in the eddy-current transducer at least one powerful permanent magnet rigidly connected with a coaxially installed sensor for measuring the variation of electromagnetic field induced by eddy-currents in the tested object.

The device closest to the proposed device based on the problem to be solved and technical substance is the "device for implementation of the method of eddy-current testing of copper wire rod" (RU2542624 C1, 20-Feb-2015) comprising a feed-through type eddy-current transducer (ECT) having at least one powerful permanent magnet rigidly connected with a coaxially installed sensor for measuring the variation of electromagnetic field induced by eddy-currents in the tested object. In this case, the electromagnetic field variation sensor is connected to the signal processing and analysis unit.

The common features of the proposed method and the prototype is that the testing of the electrically conductive object is carried out by excitation of eddy-currents using a constant magnetic field and scanning the electrically conductive object by a contactless eddy-current transducer consisting of a constant magnetic field inductor and an electromagnetic field variation sensor, which move with respect to the tested object at a rate V (m/s) and register signals corresponding to electromagnetic field variation, based on which the presence of faults is established.

A common feature of the proposed device and the prototype is the presence of a contactless eddy-current transducer consisting of a constant magnetic field inductor and an electromagnetic field variation sensor, connected to the processing and analysis unit.

The main disadvantages of this method and the device for realisation thereof are:
1. The possibility of their use only in conjunction with a feed-through type eddy-current transducer providing a two-way access to the electrically conductive object, when the constant magnetic field inductor and the electromagnetic field variation sensor are positioned on the opposite sides relative to the electrically conductive object. However, it is by no means always possible in the real production environment to provide two-way access to an electrically conductive object.
2. The need to ensure the movement of the tested object relative to the inductor and the electromagnetic field variation sensor, which is by no means always possible under the real production conditions.

This circumstance significantly reduces the possibility of practical application of such method.

### Disclosure of the Invention

The main objective of the proposed group of inventions is to expand the arsenal of technical means and methods enabling eddy-current testing of objects made of electrically conductive materials.

The technical result of the proposed group of inventions consists in realisation of the scope of the proposed solutions. In this case, the proposed method and device have wider functionality in comparison with the prototype due to providing the possibility of eddy-current testing under condition of one-way access to the object.

The invention is a method as defined by claim 1 and a device as defined by claim 10. The inventive method of eddy-current testing of electrically conductive objects is based on the excitation of eddy-current within the electrically conductive object by using a constant magnetic field, then scanning said electrically conductive object by using an eddy-current transducer comprising at least one constant-field inductor and at least one sensor for measuring the variation of electromagnetic field while moving the eddy-current transducer and electrically conductive object, and then registering signals corresponding to the electromagnetic field variation, based on which the presence of faults is established, the excitation of eddy-currents within the electrically conductive object is performed by using a surface-type eddy-current transducer with the at least one electromagnetic field variation sensor is mounted at only one of the poles of the at least one constant-field inductor and is integrated with it, while the excitation of eddy-currents is realised through the at least one electromagnetic field variation sensor for measuring the variation of magnetic field.

It is feasible perform scanning of the electrically conductive object in the direction of movement of tested object as well as in the direction perpendicular to such movement.

Scanning of the same section of the electrically conductive object can be performed multiple times.

It is possible to perform scanning by moving the electrically conductive object with respect to the eddy-current transducer and/or by moving the eddy-current transducer with respect to the electrically conductive object.

In one embodiment, it is possible to use an eddy-current transducer made of coupled inductors and electromagnetic field variation sensors spaced apart in the direction of travel, so that during scanning they can sequentially pass one after the other along the same path.

In this case, the signal from one of the coupled inductors/sensors undergoes phase inversion, while the signals from the coupled electromagnetic field variation sensors are combined. In addition, in case of using coupled sensors, a decision about the presence of a fault is made after obtaining at least two signals from the coupled electromagnetic field variation sensors. To do this, a correlation function is calculated for the first and second signals for each pair of electromagnetic field variation sensors. It is preferable to move the eddy-current transducer relative to the tested object at a rate of 0.1 to 100 m/s.

The technical result of the invention is achieved by the fact that in the known device containing an eddy-current transducer comprising at least one constant-field inductor and at least one electromagnetic field variation sensor, and a processing and analysis unit with its input connected to the output of the at least one electromagnetic field variation sensor, the surface type eddy-current transducer is used as an eddy-current transducer and the electromagnetic field variation sensor is mounted at only one of the poles of the at least one constant-field inductor, while the at least one electromagnetic field variation sensor and the at least one constant-field inductor are integrated.

An eddy-current transducer can be made of at least one pair of eddy-current transducers adapted to sequentially move one after the other along the same path in the direction of travel.

The eddy-current transducer can be mounted on a linear motion device configured to repeatedly scan the same section of the electrically conductive tested object.

In another embodiment, the eddy-current transducers can be mounted on a rotational device configured to repeatedly scan the same section of the electrically conductive object.

The electromagnetic field variation sensor can be embodied in the form of a receiving coil.

Electromagnets or any permanent magnets of arbitrary geometric shape can be used as a constant-field inductor.

The processing and analysis unit can be implemented in the form of connected in series amplifier, ADC and a computing device.

In yet another embodiment, the processing and analysis unit can be configured to have two channels, one of which contains an amplifier, and the other contains an inverter-amplifier, wherein the channel outputs are connected to a totaliser connected in to ADC and computing device.

The proposed method and device provide the ability to not only detect faults throughout the entire depth of the object due to elimination of the "skin effect", but also enable eddy-current testing with one-way access by using the surface-type transducer.

Thus, the proposed technical solutions provide the ability to detect faults not only in "long-length" objects, such as a rolled wire rod or wire, but also in any tested objects made of electrically conductive materials, which maximises the scope of their application.

The main difference between the proposed method and the technical solution of the prototype is that the excitation of eddy-currents within the tested object is realised by using a constant magnetic field of a permanent magnet or electromagnet through a receiving coil mounted at the pole of the permanent magnet, which has zero sensitivity to the constant field of the magnet, while a contactless surface-type eddy-current transducer is used for fault detection.

The main difference between the proposed device and the prototype is that said device uses a surface-type eddy-current transducer in which the electromagnetic field variation sensor is mounted at the pole of the magnet-inductor and is integrated with the inductor, while the electromagnetic field variation sensor has zero sensitivity to self-magnetic field of the inductor.

### Description of the Drawings:

- Fig. 1: schematically shows the eddy-current testing device for monitoring electrically conductive objects with a fragment of tested object containing a fault.
- Fig. 2: schematically shows the eddy-current transducer of the invention consisting of a constant-field inductor with an electromagnetic field variation sensor mounted at the pole thereof.
- Fig. 3: shows a diagram of testing the real section of the electrically conductive object containing faults depicting signals from the sensor.
- Fig. 4: shows a diagram of testing the real section of the electrically conductive object containing no faults.
- Fig. 5: shows the eddy-current testing device of the invention for monitoring electrically conductive objects with coupled eddy-current transducers.
- Fig. 6: shows a two-channel circuit of the processing and analysis unit.
- Fig. 7: shows signal diagrams explaining the operating principle of the processing and analysis unit.

### Preferred Embodiments of the Invention

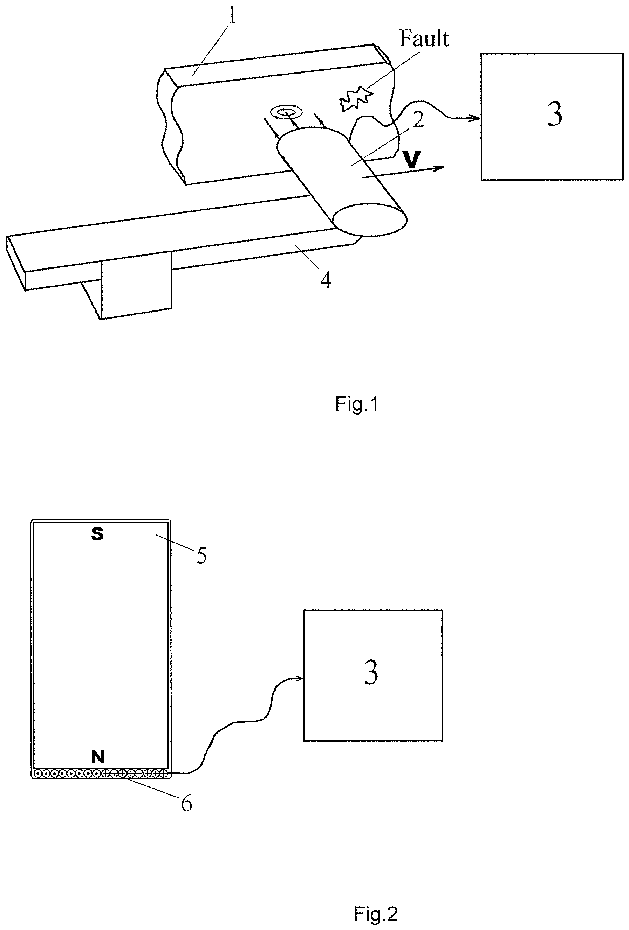

A preferred inventive embodiment of the eddy-current testing device for monitoring electrically conductive objects (Fig. 1) comprises a surface-type eddy-current transducer 2, which excites eddy-currents in the electrically conductive material of the tested object 1 containing a fault. The eddy-current transducer 2 is located on a linear motion device 4 and is connected to a processing and analysis unit 3.

The linear motion device can be adapted to repeatedly scan the same section of the tested object.

The eddy-current transducer 2 consists of a constant-field inductor 5 and an electromagnetic field variation sensor configured as a receiving coil 6 (Fig. 2). Electromagnets or any permanent magnets of arbitrary geometric shape can be used as a constant-field inductor 5.

The processing and analysis unit 3, in case it is embodied with one channel, contains connected in series amplifier, ADC and a computing device (not shown in the drawing).

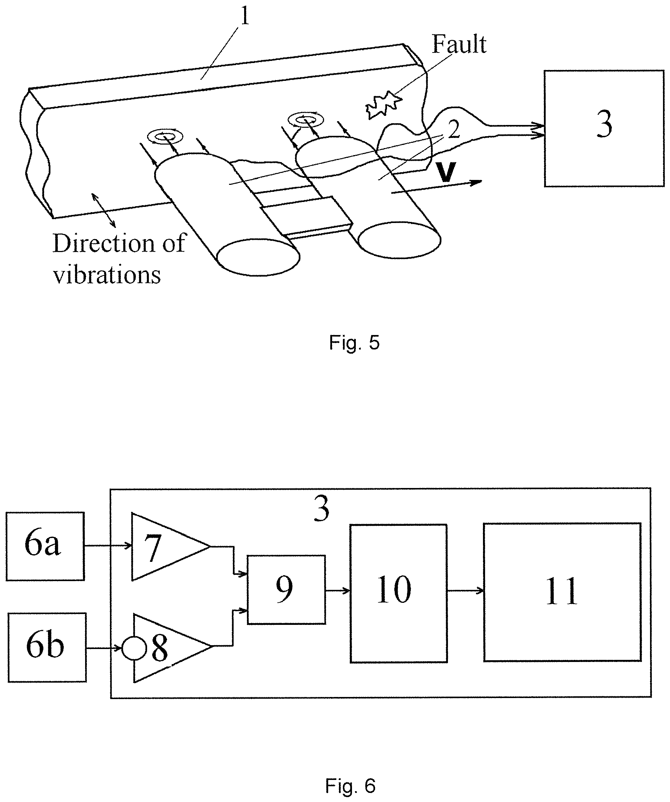

If the processing and analysis unit 3 is embodied with two-channels (Fig. 6), it comprises an amplifier 7 in one of the channels and an inverter-amplifier 8 in the other channel with the outputs of the amplifier 7 and the inverter-amplifier 8 being connected to the inputs of a totaliser 9 connected in series with ADC 10 and a computing device 11.

In a further inventive embodiment, the eddy-current transducer 2 can be made of at least one pair of eddy-current transducers (Fig. 5) spaced in the direction of travel so that they can sequentially pass one after the other along the same path. The eddy-current transducers 2 can also be mounted on a rotational device embodied in the form of a circular scanner adapted to repeatedly scan the same section of the electrically conductive object. The circular scanner represents a disk (not shown in the drawing) with a pair of eddy-current converters 2 installed on it, positioned in parallel to the surface of the electrically conductive object at a distance of 2-3 mm. The disc is driven by the motor. The signals from each of the eddy-current transducers 2 are sequentially fed to the amplifiers, wireless data transmission units (not shown in the drawing) and then to the two-channel processing and analysis unit 3.

When using a circular scanner in the proposed method and device, it is possible to perform scanning at a rate of up to several tens m/s, which enables the testing of low-conductivity composite materials, such as different types of carbon fibre - reinforced plastics.

The 2- inventive method and device operate as follows (Fig. 1).

In one embodiment, the eddy-current converter 2 moves with respect to the tested object 1 by using the linear motion device 4 at a rate of 1 to 6 m/s at a distance of 2-3 mm from the surface of the electrically conductive object 1. The constant-field inductor 5 (Fig. 2) represents a permanent magnet with an electromagnetic field variation sensor mounted at its pole and embodied in the form of the receiving coil 6 converting into current the electromagnetic field varying as a result of eddy-current interaction with the fault.

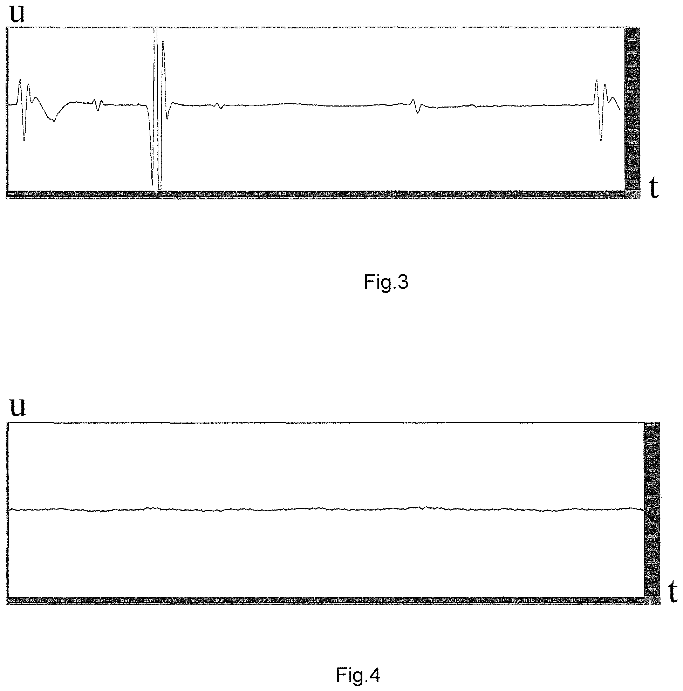

The process the magnetic field entering or exiting any arbitrary section of the electrically conductive object implies a change in strength of the magnetic field along the entire depth of the conductor, and, as a consequence, this process is accompanied by the appearance of eddy-currents. In the conductor containing no superficial or internal faults, any two arbitrarily chosen sections are similar to each other, and in this case the eddy-currents within the conductor have a steady-state nature and generate an opposing magnetic field that does not vary with time, i.e., similar to the constant field of a permanent magnet. The receiving coil 6 registers only a variable component of the magnetic field generated by eddy-currents, and therefore, in the fault-free zones, there is no signal at the output of the electromagnetic field variation sensor. Once the eddy-current transducer 2 passes by a section containing discontinuity, the steady-state nature of eddy-currents within the electrically conductive object and of the opposing magnetic field is disturbed, and a signal appears at the sensor output. The amplitude of the signal is proportional to the size of the discontinuity, which enables the use of a fault ranking system when processing signals. It was established experimentally that the dynamic range of the signals constitutes from tens of mV to 10 V. If one eddy-current transducer 2 and a one-channel signal processing unit 3 are used, the signal passes from the receiving coil 6 to the processing and analysis device 3, where it is amplified, supplied to the ADC, converted into a digital code and sent for further processing to the computing device. The results of signal processing are shown in the diagrams in Figs. 3 and 4.

Figure 3 shows a diagram of testing the real zone of the electrically conductive object containing faults, in which the amplitude fluctuations of the sensor signal are seen, which indicate the presence of various faults. A sharp increase in the signal amplitude reflects the result of the interaction between the eddy-currents and the faults in the electrically conductive object.

Figure 4 shows a diagram of testing a fault-free section of the electrically conductive object, which is practically a straight line, since no variation of AC current generated by eddy-current takes place. As has already been mentioned earlier, the reason for this is that in the conductor containing no superficial or internal faults, any two arbitrarily chosen sections are similar to each other, in which case eddy-currents in the electrically conductive object have a steady-state nature and generate an opposing magnetic field, which does not vary with time and is similar to the constant field of a permanent magnet.

In the process of practical implementation of the proposed testing method, there may be factors preventing the testing and obtaining reliable information about the presence of faults in the tested objects. Such factors could be as follows:
1. Vibrations of the eddy-current transducer with the oscillation vector directed orthogonally to the motion vector of the eddy-current transducer due to non-ideal operation of the linear motion device.
2. Vibrations of the electrically conductive object when moving relative to the eddy-current transducer the oscillation vector directed orthogonally to the motion vector of the electrically conductive object (for example, when performing eddy-current testing of the products on a rolling mill).
   In these cases, the variation in distance between the surface of the electrically conductive object and the eddy-current converter 2 due to vibrations can lead to a change in the strength of the magnetic field within the electrically conductive object and, hence, to the appearance of eddy-currents acting against these changes, which will also be registered by the electromagnetic field variation sensor 6 and in certain cases can be assumed by the processing and analysis unit 3 as faults.
3. In the real production conditions, it is possible to have electromagnetic interference from other devices located and operating in the vicinity of the eddy-current testing device, which can also be detected by the sensor, and in certain cases assumed by the processing system as faults.

It is possible to eliminate the effect of the above adverse factors by incorporating into the eddy-current testing system a differential-time processing method and a modified sensor design which implement one of the options of the proposed method and device without limiting the use of other similar options.

An inventive embodiment of such a practical implementation is shown in Fig.5.

In this embodiment, the device comprises at least one pair of eddy-current transducers, each having its own constant-field inductor 5 and its own receiving coil 6 (Fig. 2) spaced apart from each other. This distance may vary from few centimetres to several decimetres. When moving at a rate V along the electrically conductive object, the eddy-current transducers sequentially pass along the fault and, as a result of eddy-currents interaction with the fault, an ENF change occurs in the receiving coils thereof. In addition to eddy-currents interaction with the fault, the EMF in the receiving coils can also be caused by oscillations of the electrically conductive object or eddy-current transducers in the direction of the vibration vector (Fig. 5). The signals from the receiving coils 6a, 6b of the eddy-current transducers 2 are respectively fed to the preamplifier 7 and preamplifier-inverter 8 located inside the processing and analysis unit 3 and further to the totaliser 9. In the totaliser 9, the signals are subject to addition. From the output of the totaliser 9, the signal is fed to the ADC 10 and, after digitization, to the computing device 11.

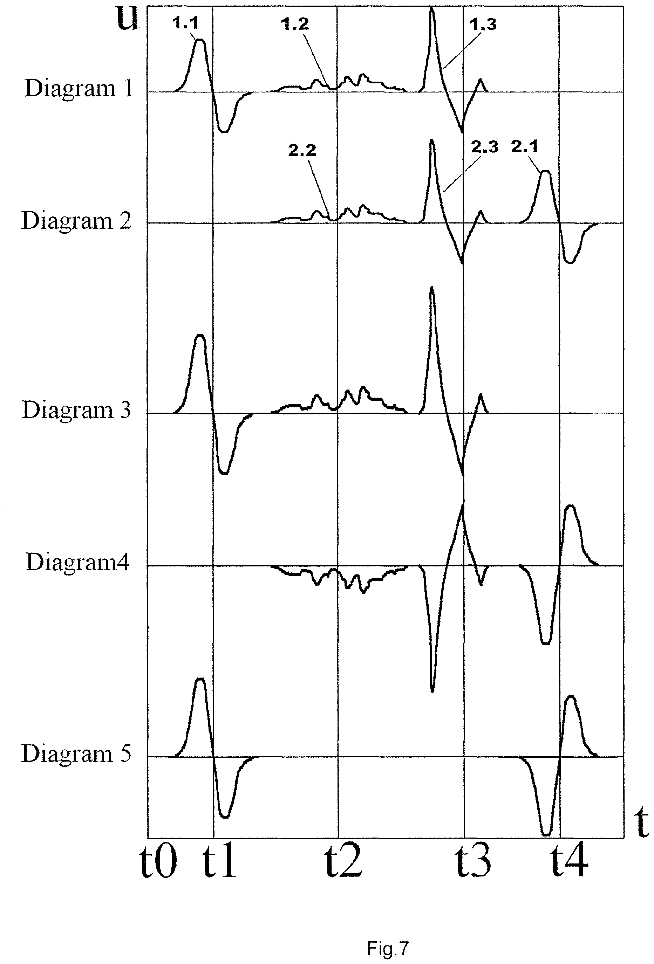

Fig. 7 shows the signal diagrams explaining the operating principle of the processing and analysis unit. Diagrams 1 and 2 contain the following information:
1.1 -fault-generated signal from the receiving coil of the first sensor;
2.1 -fault-generated signal from the receiving coil of the second sensor;
1.2 - vibration-generated signal from the receiving coil of the first sensor;
2.2 - vibration-generated signal from the receiving coil of the second sensor;
1.3 -interference signal from the receiving coil of the first sensor;
2.3 -interference signal from the receiving coil of the second sensor;

Diagram 3 shows the same fault- and vibration-generated signals, as well as interference signals from the output of the amplifier 7, which are fed to the first input of the totaliser 9.

Diagram 4 shows the same fault- and vibration-generated signals, as well as interference signals from the output of the amplifier-inverter 8, which are fed to the second input of the totaliser 9.

In this case, the following designations are used in the diagrams: U -signal amplitude, t - time axis.

As can be seen from the diagrams 3 and 4, the vibration- and interference-generated signals are synchronous and inverse with respect to each other, while the fault-generated signals are also inverse with respect to each other, but they are not synchronous and are separated in time from each other by t4 - t1. After adding up such signals by the totaliser 9, a resulting signal is produced at its output, which is fed to the input of the ADC 10 shown in diagram 5.

As can be seen from the diagrams, the proposed technology, which utilises the differential-time processing method and the modified design of the sensor embodied in the form of coupled eddy-current transducers, not only allows to completely eliminate the effect of vibration and external electromagnetic interference on the testing results, but also allows to increase the reliability of testing by obtaining a second signal in addition to the main signal, evidencing the presence of a fault in the tested object, which follows the first signal with a precise time interval of t4 - t1 and confirms the presence of the fault.

In this case, in order to increase the accuracy of testing and improve the reliability of confirming the fault presence for the second signal, the signal processing software performs the inversion of the second signal followed by the calculation of the correlation function for both the first and the second signals in order to determine the presence of the fault in the given zone of the tested object.

Such method of increasing the accuracy of testing and improving the reliability of confirming the fault presence is based on the fact that after the repeated inversion of the second signal, both signals (first and second) become similar to each other, because they are caused by the same fault and are spaced in time due to the time difference at which the coupled first and second eddy-current transducers 2 pass by the fault. By sequentially combining such signals and calculating the correlation function, the value of the latter will be close to unity, which will serve as the evidence of the fact that both eddy-current transducers have registered the same fault.

In the proposed method and device, in order to increase the accuracy of testing when using a linear motion device or a circular scanner to obtain and process information, it is possible to utilise the principle of accumulating information by performing multiple scans of the portion of electrically conductive object, which allows detecting faults even in low-conductivity composite materials demonstrating anisotropy of conductivity. A specially developed signal processing program allows determining the locations of the fault and evaluate its effect on the quality of the tested object.

### Industrial applicability

The proposed method and device enable the application of the invention for testing of any electrically conductive objects made of different types of materials. In this case, the possibility of conducting the eddy-current testing with one-way access to the tested object expands the applicability of such method and device. The invention can be used in any industry where quality control of the products with complicated access is required, specifically, for controlling rolled sheet and tubular products.

## Claims

1. A method of eddy-current testing of electrically conductive objects (1), based on the excitation of eddy current within an electrically conductive object (1) by using a constant magnetic field, then scanning said electrically conductive object (1) by using an eddy-current transducer (2) comprising at least one constant-field inductor (5) and at least one electromagnetic field variation sensor (6, 6a, 6b) for measuring the variation of electromagnetic field while moving the eddy-current transducer (2) and electrically conductive object (1), and then registering the signals corresponding to the electromagnetic field variation, according to which the presence of faults is established,
**characterized in that**
the excitation of eddy currents within the electrically conductive object (1) is performed by using the surface-type eddy-current transducer (2) with the at least one electromagnetic field variation sensor (6, 6a, 6b) is mounted at only one of the poles of the at least one constant-field inductor (5) and is integrated with it, while the excitation of eddy currents is realised using the constant magnetic field of the at least one constant-field inductor (5) going through the at least one electromagnetic field variation sensor (6, 6a, 6b) for measuring the variation of magnetic field, wherein the scanning is performed by moving the electrically conductive object with respect to the eddy-current transducer and/or by moving said eddy-current transducer with respect to said electrically conductive object.

2. The method of claim 1, *wherein* the scanning of the electrically conductive object is performed in the direction of movement of said electrically conductive object and/or in the direction perpendicular to such movement.

3. The method of claim 1, *wherein* the scanning of the same section of the electrically conductive object is performed multiple times.

4. The method according to claim 1, *wherein* said eddy-current transducer is made of coupled inductors and electromagnetic field variation sensors spaced in the direction of travel to enable their sequential passage one after the other along the same path during scanning.

5. The method of claim 4, *wherein* a signal from one of the coupled electromagnetic field variation sensors undergoes phase inversion.

6. The method of claim 5, *wherein* the signals from the coupled electromagnetic field variation sensors are subjected to addition.

7. The method according to claim 5, *wherein* the presence of a fault is determined upon receiving signals from each of the coupled electromagnetic field variation sensors.

8. The method of claim 5, *wherein* a correlation function is determined for each pair of signals from the sensors.

9. The method of claim 1, *wherein* the eddy-current transducer is moved relative to the tested object at a rate of 0.1 to 100 m/s.

10. A device for realising the method of claim 1, comprising an eddy-current transducer (2) consisting of at least one constant-field inductor (5) and at least one electromagnetic field variation sensor (6, 6a, 6b), and a processing and analysis unit (3) whose input is coupled to the output of the at least one electromagnetic field variation sensor (6, 6a, 6b),
**characterized in that**
the surface-type eddy-current transducer (2) is used as an eddy-current transducer (2), and the at least one electromagnetic field variation sensor (6, 6a, 6b) is mounted at only one of the poles of the at least one constant-field inductor (5), while the at least one electromagnetic field variation sensor (6, 6a, 6b) and the at least one constant-field inductor (5) are integrated, while the excitation of eddy currents is realised using the constant magnetic field of the at least one constant-field inductor (5) going through the at least one electromagnetic field variation sensor (6, 6a, 6b) for measuring the variation of magnetic field.

11. The device of claim 10, *wherein* the eddy-current transducer can be made of at least one pair of eddy-current transducers spaced in the direction of travel to enable their sequential passage one after the other along the same path.

12. The device of claim 10, *wherein* the eddy-current transducer is adapted to be mounted on a linear motion device capable of repeatedly scanning the same section of the tested object.

13. The device of claim 10, *wherein* the eddy-current transducer is adapted to be mounted on a rotational device capable of repeatedly scanning the same section of the electrically conductive object.

14. The device of claim 10, *wherein* the electromagnetic field variation sensor is embodied in the form of a receiving coil.

15. The device of claim 10, *wherein* electromagnets or any permanent magnets of arbitrary geometric shape are used as the constant-field inductor.

16. The device of claim 10, *wherein* the processing and analysis unit is embodied in the form of connected in series amplifier, ADC and computing device.

17. The device of claim 10, *wherein* the processing and analysis unit is embodied in the form of two channels, one of which contains an amplifier and the other contains an amplifier- inverter, while the outputs of said amplifier and said amplifier-inverter are coupled to the inputs of a totaliser whose output is connected in series with said ADC and said computing device.

## Patentansprüche

1. Verfahren zur Wirbelstromprüfung von elektrisch leitenden Objekten (1), basierend auf der Anregung eines Wirbelstroms innerhalb eines elektrisch leitenden Objekts (1) unter Verwendung eines konstanten Magnetfelds, mit Abtasten des elektrisch leitenden Objekts (1) unter Verwendung eines Wirbelstromwandlers (2), der mindestens einen Konstantfeldinduktor (5) und mindestens einen Sensor für die Veränderung des elektromagnetischen Felds (6, 6a, 6b) zum Messen der Veränderung des elektromagnetischen Feldes während der Bewegung des Wirbelstromwandlers (2) und des elektrisch leitenden Objekts (1), und anschließendem Registrieren der der Veränderung des elektromagnetischen Feldes entsprechenden Signale, wonach das Vorhandensein von Fehlern festgestellt wird, aufweist, **dadurch gekennzeichnet, dass**
die Anregung von Wirbelströmen innerhalb des elektrisch leitenden Objekts (1) unter Verwendung des Oberflächen-Wirbelstromwandlers (2) erfolgt, wobei der mindestens eine Sensor für die Veränderung des elektromagnetischen Feldes (6, 6a, 6b) nur an einem der Pole des mindestens einen Konstantfeldinduktors (5) angebracht und mit diesem integriert ist, während die Erregung von Wirbelströmen unter Verwendung des konstanten Magnetfelds des mindestens einen Gleichfeldinduktors (5), das durch den mindestens einen Sensor (6, 6a, 6b) für die Veränderung des elektromagnetischen Felds verläuft, zum Messen der Veränderung des Magnetfelds realisiert wird, wobei die Abtastung durch Bewegen des elektrisch leitenden Objekts in Bezug auf den Wirbelstromwandler und/oder durch Bewegen des Wirbelstromwandlers in Bezug auf das elektrisch leitende Objekt durchgeführt wird.

2. Verfahren nach Anspruch 1, ***dadurch gekennzeichnet, dass*** die Abtastung des elektrisch leitfähigen Objekts in der Bewegungsrichtung des elektrisch leitfähigen Objekts und/oder in der Richtung senkrecht zu dieser Bewegung erfolgt.

3. Verfahren nach Anspruch 1, ***dadurch gekennzeichnet, dass*** die Abtastung desselben Abschnitts des elektrisch leitenden Objekts mehrfach durchgeführt wird.

4. Verfahren nach Anspruch 1, ***dadurch gekennzeichnet, dass*** der Wirbelstromwandler gekoppelte Induktoren und elektromagnetische Feldänderungssensoren aufweist, die in Fahrtrichtung voneinander beabstandet sind, so dass sie während der Abtastung nacheinander auf demselben Weg durchlaufen werden können.

5. Verfahren nach Anspruch 4, ***dadurch gekennzeichnet, dass*** ein Signal von einem der gekoppelten elektromagnetischen Feldänderungssensoren einer Phaseninversion unterzogen wird.

6. Verfahren nach Anspruch 5, ***dadurch gekennzeichnet, dass*** die Signale der gekoppelten Sensoren für elektromagnetische Feldänderungen addiert werden.

7. Verfahren nach Anspruch 5, ***dadurch gekennzeichnet, dass*** das Vorhandensein eines Fehlers durch den Empfang von Signalen von jedem der gekoppelten Sensoren für elektromagnetische Feldänderungen bestimmt wird.

8. Verfahren nach Anspruch 5, ***dadurch gekennzeichnet, dass*** für jedes Signalpaar der Sensoren eine Korrelationsfunktion bestimmt wird.

9. Verfahren nach Anspruch 1, ***dadurch gekennzeichnet, dass*** der Wirbelstromwandler mit einer Geschwindigkeit von 0,1 bis 100 m/s relativ zu dem geprüften Objekt bewegt wird.

10. Vorrichtung zur Durchführung des Verfahrens nach Anspruch 1, aufweisend einen Wirbelstromwandler (2), bestehend aus mindestens einer Konstantfeldinduktivität (5) und mindestens einem elektromagnetischen Feldänderungssensor (6, 6a, 6b), und eine Verarbeitungs- und Auswerteeinheit (3), deren Eingang mit dem Ausgang des mindestens einen elektromagnetischen Feldänderungssensors (6, 6a, 6b) gekoppelt ist,
**dadurch gekennzeichnet,**
**dass** der Oberflächen-Wirbelstromwandler (2) als Wirbelstromwandler (2) verwendet wird, und der mindestens eine Sensor für die Veränderung des elektromagnetischen Feldes (6, 6a, 6b) nur an einem der Pole des mindestens einen Konstantfeldinduktors (5) angebracht ist, während der mindestens eine Sensor für die Veränderung des elektromagnetischen Feldes (6, 6a, 6b) und der mindestens eine Konstantfeldinduktor (5) integriert sind, während die Erregung von Wirbelströmen unter Verwendung des konstanten Magnetfelds des mindestens einen Konstantfeldinduktors (5), das durch den mindestens einen Sensor (6, 6a, 6b) für die Veränderung des elektromagnetischen Felds verläuft, zur Messung der Veränderung des Magnetfelds erfolgt.

11. Vorrichtung nach Anspruch 10,
**dadurch gekennzeichnet,**
**dass** der Wirbelstromwandler aus mindestens einem Paar von Wirbelstromwandlern bestehen kann, die in Fahrtrichtung voneinander beabstandet sind, um ihren aufeinanderfolgenden Durchgang entlang desselben Weges zu ermöglichen.

12. Vorrichtung nach Anspruch 10, ***dadurch gekennzeichnet, dass*** der Wirbelstromwandler an einer Linearbewegungsvorrichtung angebracht werden kann, die in der Lage ist, denselben Abschnitt des geprüften Objekts wiederholt abzutasten.

13. Vorrichtung nach Anspruch 10, ***dadurch gekennzeichnet, dass*** der Wirbelstromwandler an einer Rotationsvorrichtung angebracht werden kann, die in der Lage ist, denselben Abschnitt des elektrisch leitenden Objekts wiederholt abzutasten.

14. Vorrichtung nach Anspruch 10, ***dadurch gekennzeichnet, dass*** der Sensor für die Veränderung des elektromagnetischen Feldes in Form einer Empfangsspule ausgeführt ist.

15. Vorrichtung nach Anspruch 10, ***dadurch gekennzeichnet, dass*** als Konstantfeldinduktor Elektromagnete oder beliebige Dauermagnete mit beliebiger geometrischer Form verwendet werden.

16. Vorrichtung nach Anspruch 10, ***dadurch gekennzeichnet, dass*** die Verarbeitungs-und Analyseeinheit in Form eines in Reihe geschalteten Verstärkers, eines ADC und eines Rechengeräts ausgeführt ist.

17. Vorrichtung nach Anspruch 10, ***dadurch gekennzeichnet, dass*** die Verarbeitungs-und Analyseeinheit in Form von zwei Kanälen ausgeführt ist, von denen einer einen Verstärker und der andere einen Verstärker-Inverter enthält, während die Ausgänge des Verstärkers und des Verstärker-Inverters mit den Eingängen eines Totalisators gekoppelt sind, dessen Ausgang mit dem ADC und der Rechenvorrichtung in Reihe geschaltet ist.

## Revendications

1. Procédé pour l'essai de courant de Foucault d'objets électriquement conducteurs (1) basé sur la stimulation du courant Foucault à l'intérieur d'un objet électriquement conducteur (1) sous l'utilisation d'un champ magnétique constant avec la détection de l'objet électriquement conducteur (1) sous l'utilisation d'un transducteur du courant Foucault (2) présentant au minimum un inducteur de champ constant (5) et au minimum un capteur pour le changement du champ électromagnétique (6, 6a, 6b) pour la mesuration du changement du champ électromagnétique lors du mouvement du transducteur du courant Foucault (2) et de l'objet électriquement conducteur (1) et la création par la suite de signaux correspondant au changement du champ électromagnétique selon lequel la présence de défauts est détectable est caractérisé de sorte que
La stimulation des courants de Foucault à l'intérieur de l'objet électriquement conducteur (1) a lieu sous l'utilisation des transducteurs de courants de Foucault de surface (2) où un capteur au minimum est seulement monté pour le changement du champ électromagnétique (6, 6a, 6b) sur un pôle de l'inducteur du champ constant (5) au minimum et est intégré à ce dernier, tandis que la stimulation des courants de Foucault sous l'utilisation du champ magnétique constant d'au minimum un inducteur du champ continu (5) se déroule pour la mesuration et la réalisation du changement du champ magnétique où la détection se fasse par le biais du déplacement de l'objet électriquement conducteur en relation avec le transducteur du courant de Foucault et/ou le déplacement du transducteur du courant de Foucault vers l'objet électriquement conducteur.

2. Procédé selon la revendication 1 est caractérisé de sorte que la détection de l'objet électroconducteur a lieu dans la direction de déplacement de l'objet électroconducteur et/ou dans la direction perpendiculaire vers le dit déplacement.

3. Procédé selon la revendication 1 est caractérisé de sorte que la détection de la même partie de l'objet électriquement conducteur est exécutée à plusieurs reprises.

4. Procédé selon la revendication 1 est caractérisé de sorte que le transducteur du courant de Foucault présente des inducteurs en couplage et des capteurs de changement de champ qui sont distancés les uns des autres en direction de la marche de sorte qu'ils puissent traverser successivement et sur le même cheminement lors de la détection.

5. Procédé selon la revendication 4 est caractérisé de sorte qu'un signal est soumis par inversion de phase des capteurs de changement du champ électromagnétiques en couplage.

6. Procédé selon la revendication 5 est caractérisé de sorte que les signales des capteurs en couplage s'ajoutent pour les changements de champ électromagnétiques.

7. Procédé selon la revendication 5 est caractérisé de sorte que la présence d'un défaut est déterminée par la réception de chacun des capteurs en couplage des changements de champ électromagnétiques.

8. Procédé selon la revendication 5 est caractérisé de sorte qu'une fonction de corrélation est prévue pour chaque paire de signal des capteurs.

9. Procédé selon la revendication 1 est caractérisé de sorte que le transducteur de courant Foucault est déplacé à une vitesse de 0,1 jusqu'à 100 m/s à titre relatif vers l'objet examiné.

10. Dispositif pour l'exécution du procédé selon la revendication 1 présentant un transducteur de courant de Foucault (2) se composant d'au minimum une inductance de champ constante (5) et d'au minimum un capteur de changement de champ électromagnétique (6, 6a, 6b) et une unité de transformation et d'analyse (3) dont l'entrée est couplée à la sortie d'au minimum le capteur de changement de champ électromagnétique (6, 6a, 6b) est caractérisé de sorte que le transducteur de courant de Foucault de surface (2) est utilisé en tant que transducteur de courant de Foucault (2) et sur lequel est monté au minimum et seulement un capteur pour le changement du champ électromagnétique (6, 6a, 6b) sur un des pôles d'au minium l'inducteur de champ constant (5), tandis qu'au minimum un capteur pour le changement du champ électromagnétique (6, 6a, 6b) et au minimum un inducteur de champ constant (5) sont intégrés, tandis que la stimulation des courants de Foucault a lieu sous l'utilisation du champ magnétique constant d'au minimum un inducteur de champ constant (5), s'étendant sur un capteur (6, 6a, 6b) pour le changement du champ électromagnétique , ayant lieu pour la mesuration du changement du champ magnétique.

11. Dispositif selon la revendication 10 est caractérisé de sorte que le transducteur de courant Foucault puisse se composer d'au minimum une paire de transducteurs de courant Foucault qui sont distancés les uns des autres dans la direction de déplacement pour faciliter le passage séquentiel tout au long du même cheminement.

12. Dispositif selon la revendication 10 est caractérisé de sorte que le transducteur de courant Foucault puisse être monté sur un dispositif de mouvement linéaire qui est en mesure de détecter la même partie de l'objet examiné à titre répétitif.

13. Dispositif selon la revendication 10 est caractérisé de sorte que le transducteur de courant Foucault puisse être monté sur un dispositif rotatif qui est en mesure de détecter la même partie de l'objet électriquement conducteur.

14. Dispositif selon la revendication 10 est caractérisé de sorte que le capteur est exécuté pour le changement du champ électromagnétique sous forme d'une bobine réceptrice.

15. Dispositif selon la revendication 10 est caractérisé de sorte que des électroaimants ou le cas échéant des aimants permanents quelconques présentant une forme géométrique quelconque sont utilisés comme un inducteur du champ constant.

16. Dispositif selon la revendication 10 est caractérisé de sorte que l'unité de transformation et d'analyse est exécutée sous forme d'un amplificateur connecté en série, d'un CDA et d'un appareil de calcul.

17. Dispositif selon la revendication 10 est caractérisé de sorte que l'unité de transformation et d'analyse est exécutée sous forme de deux canaux dont l'un contient un amplificateur et l'autre un inverseur- amplificateur, tandis que les sorties de l'amplificateur et de l' inverseur- amplificateur sont couplées avec les entrées d'un toliseur dont la sortie est connectée en série avec le CDA et le dispositif informatique.
